# EUROPEAN PATENT APPLICATION

(11) **EP 1 487 155 A2**
(43) Date of publication of application: **15.12.2004**
(21) Application number: 04011402.7
(22) Date of filing: 13.05.2004
(51) Int. Cl.: H04L 12/28

(54) **Coordinator switching method and communication system using the same**

(30) Priority: 13.06.2003 KR 2003038444
(71) Applicant: Samsung Electronics Co., Ltd., Suwon-si, Gyeonggi-do (KR)
(72) Inventor: Oh, Seung-hwan, Suwon-si, Gyeonggi-do (KR); Kim, Won-soo, A-520 Dorm. Samsung Adv. Inst. Tech., Yongin-si, Gyeonggi-do (KR)
(74) Representative: Grünecker, Kinkeldey, Stockmair & Schwanhäusser Anwaltssozietät

(57) **Abstract**

A coordinator switching method and a communication system using the same, which can promptly replace the present coordinator with another device if an unexpected situation happens so that the present coordinator cannot suddenly broadcast a sync signal in the ad-hoc network environment. The coordinator switching method includes selecting a coordinator that broadcasts a sync signal for synchronizing the ad-hoc network environment, selecting at least one of a plurality of devices linked to an ad-hoc network as a replacement coordinator and setting a priority of the selected replacement coordinator, transmitting the priority to the selected replacement coordinator, and if the sync signal is not broadcast for a predetermined time, the replacement coordinator becoming a new coordinator in accordance with the set priority to broadcast the sync signal.

## Description

### CROSS-REFERENCE TO RELATED APPLICATIONS

This application claims the benefit of Korean Application No. 2003-38444, filed June 13, 2003, in the Korean Intellectual Property Office, the disclosure of which is incorporated herein by reference.

### BACKGROUND

### 1. Field of the Invention

The present invention relates to a coordinator switching method and a communication system using the same, and more particularly, to a coordinator switching method and a communication system using the same which can promptly replace a coordinator with another one if an unexpected situation happens so that the coordinator, which synchronizes the ad-hoc network environment, cannot broadcast a sync signal.

### 2. Description of the Related Art

An ad-hoc network environment is synchronized by a device which serves as a coordinator. For example, according to the IEEE (Institute of Electrical and Electronics Engineers) 802.11 standard, all devices, which connect with the ad-hoc network environment, can be a coordinator that synchronizes the ad-hoc network environment for each beacon frame using a backoff method.

On the contrary, according to Bluetooth that is the IEEE 802.15.1 standard, the IEEE 802.15.3 and IEEE 802.15.3a high-rate WPAN (Wireless Personal Area Network) standard, the IEEE 802.15.4 low-rate WPAN standard, etc., only one coordinator exists while the ad-hoc network environment is maintained. Accordingly, beacon frames, which are generated for the same period, are broadcast and synchronized by one coordinator to a device connected to the network. However, if an unexpected situation happens that the coordinator abruptly moves to escape from the linked network and thus cannot broadcast a sync signal during the synchronization performed by the coordinator, the coordinator should be replaced by a proper device for the synchronization of the corresponding ad-hoc network environment to perform a resynchronization process.

According to a generally used coordinator switching method, if an unexpected situation happens that the beacon frames are not broadcast by the present coordinator for a predetermined time, devices, which connect to the corresponding network, first stop their transmitting/receiving operations, wait for a preset time, and then generate the beacon frames, respectively. At this time, the first device, which first generated the beacon frames, becomes a new coordinator. Then, during the process of constructing the ad-hoc network environment, a hand-over from the present coordinator to another coordinator is performed according to the attribute of the connected device.

The above-described coordinator switching method, however, has problems in that it requires a lot of time, in the range of 30ms∼251s according to the number of scan channels, and since the coordinator may frequently be switched in a communication environment having a high degree of mobility, the overhead may be increased due to frequent resynchronization processes. Especially, if the mobility is increased in the environment such as the WPAN, the resynchronization process due to the frequent coordinator switching operations may cause a normal communication process to become impossible.

### SUMMARY

In an effort to solve the problems described above, it is an aspect of an embodiment of the present invention to provide a coordinator switching method in an ad-hoc network environment and a communication system using the same which can promptly replace the present coordinator with another device if an unexpected situation happens so that the present coordinator cannot suddenly broadcast a sync signal in the ad-hoc network environment.

To achieve the above aspects and/or other features of the present invention, there is provided a coordinator switching method. The coordinator switching method comprises (a) selecting a coordinator that broadcasts a sync signal for synchronizing an ad-hoc network environment, (b) selecting at least one of a plurality of devices linked to the ad-hoc network as a replacement coordinator, and setting a priority of the selected replacement coordinator, (c) transmitting the priority to the selected replacement coordinator, and (d) if the sync signal is not broadcast for a predetermined time, the replacement coordinator becomes a new coordinator in accordance with the set priority, and becomes the sync signal.

The coordinator switching method may further comprise including a total number of selected replacement coordinators in the sync signal and transmitting the sync signal, and if a connection release from the ad-hoc network is requested by any one of the replacement coordinators, changing the priority and including the changed priority in the sync signal to be broadcast.

Element (b) may comprise (b1) at least one of the plurality of devices transmitting a connection request command to the coordinator, (b2) the coordinator selecting the replacement coordinator by inquiring the connection request command, and (b3) setting the priority corresponding to a selection order of the replacement coordinator.

The ad-hoc network may be a WPAN (Wireless Personal Area Network) according to any one of the IEEE 802.15.3, IEEE 802.15.3a, and IEEE 802.15.4 standards. In this case, a total number of replacement coordinators and a changed priority may be included in a beacon frame used as the sync signal to be transmitted. Specifically, the total number of replacement coordinators may be stored in a reserved field of a frame control field in a beacon frame along with an identifier for identifying the total number of replacement coordinators. In the same manner, the changed priority may be stored in reserved bits of a frame control field in the beacon frame along with an identifier for identifying the total number of replacement coordinators.

Also, at (b1), an association request command can be used in that the connection request command uses an association request command, and at (c), the priority can be included in an association response command to be transmitted. At this time, the priority can be stored in a reserved field of a frame control field in the association response command.

Meanwhile, a communication system using a coordinator switching method according to the present invention operates in an ad-hoc network environment, and includes a plurality of devices connected to an ad-hoc network, and a coordinator for synchronizing the at least one of a plurality of devices by broadcasting a sync signal to the devices. At this time, the coordinator selects at least one replacement coordinator that can serve as the coordinator by inquiring a connection request command which is transmitted from the plurality of devices, and transmits a connection response command that includes a priority of the selected replacement coordinator to the device selected as the replacement coordinator. The replacement coordinator, which is selected as the replacement coordinator, becomes a new coordinator according to a set priority, and broadcasts the sync signal if the sync signal is not broadcast for a predetermined time.

The coordinator may include a first transmission/reception unit for performing communications with at least one of the plurality of devices, a first beacon generation unit for generating the sync signal, a first association command generation unit for generating a connection response command including the priority, and a first control unit for broadcasting the sync signal through the first transmission/reception unit, selecting the replacement coordinator and setting the priority by inquiring the connection request command, and transmitting the connection response command, which is generated by providing the set priority to the first association command generation unit, to the device selected as the replacement coordinator through the first transmission/reception unit.

Also, the plurality of devices may include a second transmission/reception unit for performing communications with the coordinator, a second beacon generation unit for generating the sync signal, a second association command generation unit for generating a connection response command, a slot counter for calculating a waiting time corresponding to the priority, a signal strength detection unit for detecting whether the sync signal is received, and a second control unit for transmitting the connection request command to the coordinator through the second transmission/reception unit, providing the priority extracted from the received connection response command to the slot counter, and controlling to broadcast the sync signal through the second transmission/reception unit after the waiting time outputted from the slot counter if the sync signal is not broadcast as a result of detection by the signal strength detection unit.

Also, the ad-hoc network may be a WPAN (Wireless Personal Area Network) according to any one of the IEEE 802.15.3, IEEE 802.15.3a, and IEEE 802.15.4 standards. In this case, an association request command is used as the connection request command, and the coordinator can select the replacement coordinator by inquiring a capability information field in the association request command.

### BRIEF DESCRIPTION OF THE DRAWINGS

The above objects and other advantages of the present invention will become more apparent by describing in detail an exemplary embodiment thereof with reference to the attached drawings in which:

FIG. 1 is a view explaining a network environment to which a coordinator switching method is applied according to the present invention;

FIG. 2 is a block diagram of a device in a communication system using a coordinator switching method according to the present invention;

FIGS. 3 to 5 are flowcharts explaining a coordinator switching method according to the present invention;

FIG. 6 is a view illustrating the structure of an association request command;

FIG. 7 is a view illustrating the structure of an association response command;

FIGS. 8A and 8B are views explaining a beacon frame;

FIGS. 9 and 10 are views explaining a coordinator switching method according to the present invention; and

FIGS. 11 and 12 are graphs illustrating simulation results of the capabilities of the coordinator switching method according to the present invention and the coordinator switching method according to the related art.

### DETAILED DESCRIPTION OF THE EXEMPLARY EMBODIMENT

Now, a coordinator switching method according to the present invention will be described in detail with reference to the annexed drawings in which like reference numerals refer to like elements.

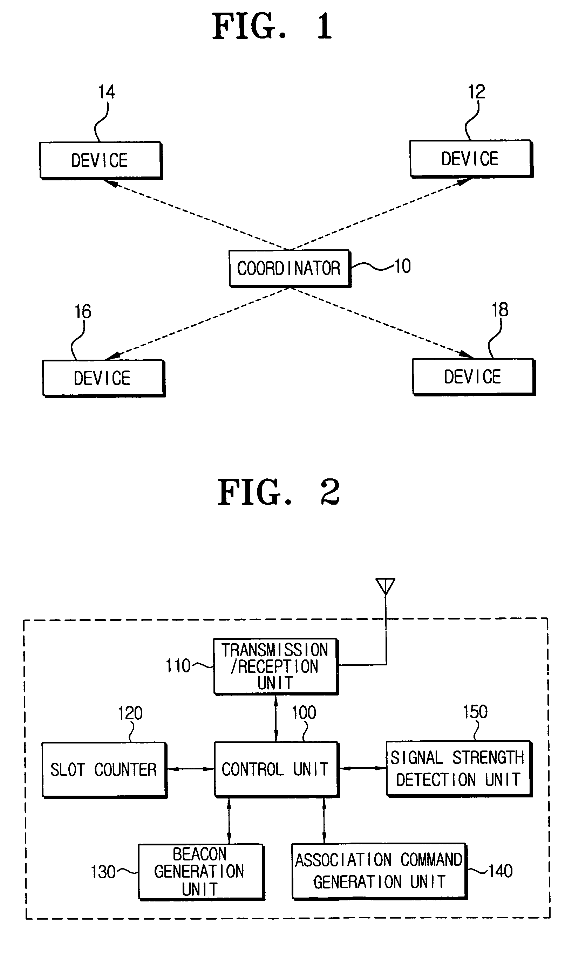

FIG. 1 is a view explaining a network environment to which a coordinator switching method is applied according to the present invention. Referring to FIG. 1, a plurality of devices 10, 12, 14, 16 and 18 constitute a network, and one of the plurality of devices in the network becomes a coordinator. The coordinator 10 synchronizes the devices connected to the network by broadcasting a beacon frame that is a sync signal to the remaining devices 12, 14, 16 and 18. In the drawing, for convenience' sake in explanation, only one coordinator 10 and four devices 10, 14, 16 and 18 are illustrated, but more devices that connect to the ad-hoc network can be provided.

FIG. 2 is a block diagram of a device in a communication system using a coordinator switching method according to the present invention. Since the coordinator is selected among the devices that constitute the network, the coordinator and the device are basically identical in construction. Referring to the drawing, the device includes a control unit 100, a transmission/reception unit 110, a slot counter 120, a beacon generation unit 130, an association command generation unit 140, and a signal strength detection unit 150.

The transmission/reception unit 110 provides a communication interface with other devices connected to the network. The slot counter 120 calculates a waiting time corresponding to the priority of the device itself by counting slots. The beacon generation unit 130 generates a beacon frame used as the sync signal, and the association command generation unit 140 generates an association command that is related to a connection request and a connection response. The signal strength detection unit 150 accurately detects whether the beacon frame is broadcast from the present coordinator by comparing the level of a received signal with a predetermined threshold value.

The control unit 100 controls operations of various parts, and in the case that the device operates as the coordinator, it controls to broadcast the beacon frame generated from the beacon generation unit 130 through the transmission/reception unit 110. Also, the control unit selects a replacement coordinator, which can serve as a new coordinator among the devices that connect to the network, sets a priority of the selected replacement coordinator so that the selected replacement coordinator can serve as a new coordinator, and controls the generation and transmission/reception of commands related to the above-described operations.

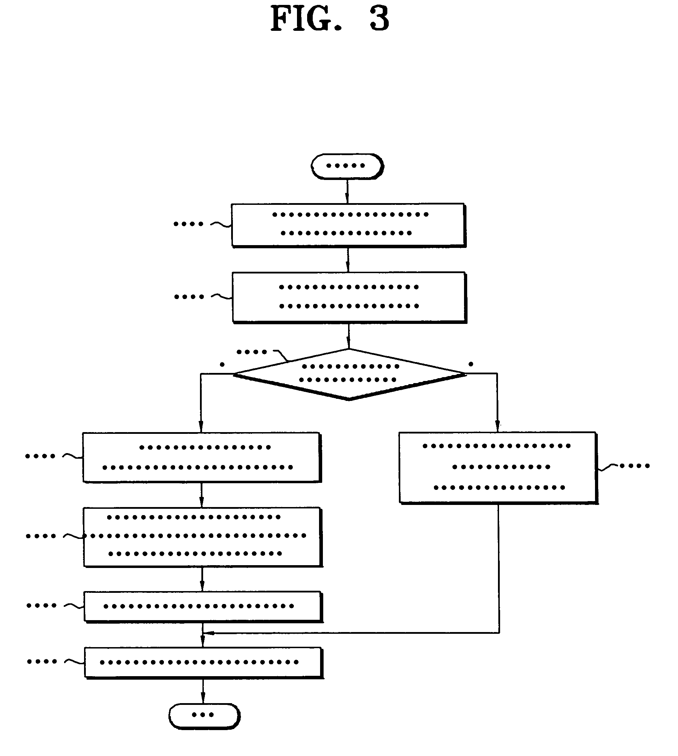

FIGS. 3 to 5 are flowcharts explaining the coordinator switching method according to the present invention. Among them, FIG. 3 is a flowchart explaining the operation of the device that acts as the coordinator.

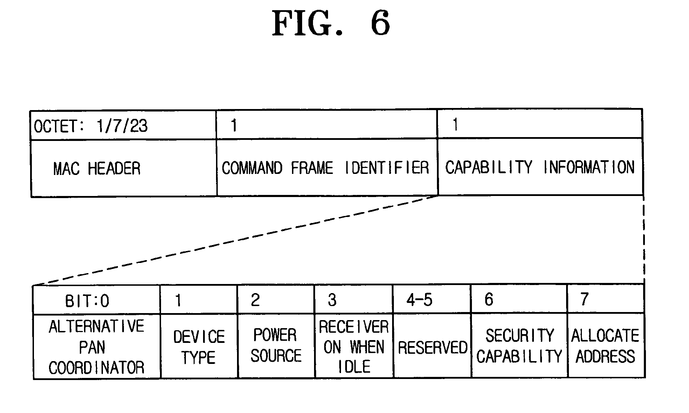

Referring to FIG. 3, the present coordinator receives the association request command from the device linked to the network (S200). The association request command, as shown in FIG. 6, is the same as that prescribed in the IEEE 801.15.4. That is, the association request command is composed of a Medium Access Control (MAC) header field, a command frame identifier field, and a capability information field. Also, the capability information field is composed of bits of an alternative Personal Area Network (PAN) coordinator, device type, power source, receiver on when idle, reserved, security capability and allocate address.

If the value of the alternative PAN coordinator bit is '1', it means that the corresponding device can become a replacement coordinator, and if it is '0', it means that the corresponding device cannot become the replacement coordinator. The device type bit has a value of '1' in the case that the device is a FFD (Full Function Device). The power source bit is set to '1' in the case that the device has a source that continuously supplies direct current (DC) power. The receiver on when idle bit is set to '1' in the case that the device is a device that is switched from an idle state to a receiver on (RX_ON) state. The security capability bit has a value of '1' in the case that the device has a security function. Also, the allocate address bit is set to '1' in the case that the device, which requests the association, desires to be allocated with a 16-bit address rather than a 64-bit address. The detailed contents of the capability information field are prescribed in the IEEE 802.15.4 standard document.

The coordinator judges whether the device, which transmitted the association request command, can be the replacement coordinator by inquiring the capability information field from the received association request command (S205). If the device can be the replacement coordinator as a result of judgment (S210), the coordinator sets the priority of the device, by which the device can be a new coordinator (S215), and transmits the association response command that includes the priority information to the device selected as the replacement coordinator (S220).

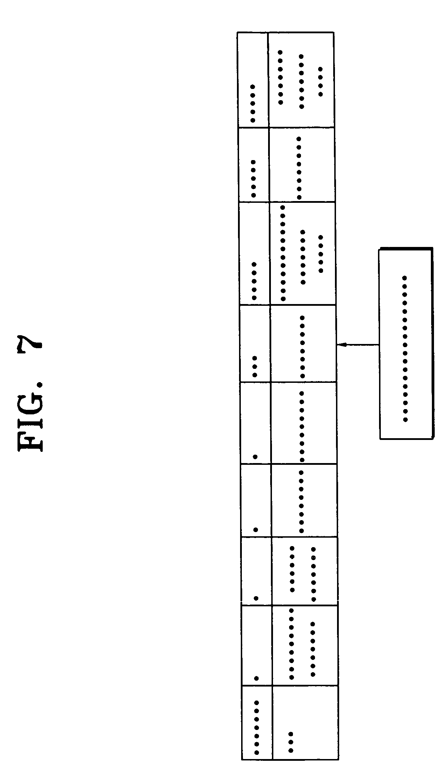

FIG. 7 illustrates a frame control field in the association response command. Referring to FIG. 7, the frame control field in the association response command has bits 0-2 of '011', and is composed of bits of a security enabled, frame pending, acknowledgment request, intra PAN, reserved, destination address mode, reserved, and source address mode.

The security enabled bit is set to '1' if the corresponding device has a security function, and the frame pending bit is set to '1' if more data to be transmitted exists after the transmission of the present frame. The acknowledgement request bit is set to '1' if it is required that the device, which received the corresponding frame, transmits the acknowledgment. The intra PAN bit is set to '0' if the corresponding frame is a frame that is transmitted from the present PAN to another PAN, and is set to '1' if the corresponding frame is a frame that is transmitted in the present PAN. The destination address mode bits indicate whether the address of the destination is of 16 bits or 64 bits, or if there is no address of the destination. The source address mode bits indicate whether the address of the source is of 16 bits or 64 bits, or if there is no address of the destination. The association response command is basically identical to that prescribed in the 801.15.4 standard, and in the present invention, it uses reserved bits composed of 7-9 bits. That is, the priority information is stored in the reserved bits to be transmitted. After the transmission of the association response command is completed, the priority counter is updated (S225). The update of the priority counter is referred to in setting the next priority information. If the priority counter is updated to increase, the priority can be determined according to the selection order of the replacement coordinator.

If the update of the priority counter is completed, the coordinator performs a general operation (S230). If it is determined that the device, which sent the association request command, cannot be the replacement coordinator at step S210, the coordinator transmits a general association response command that does not include the priority information (S235), and then performs a general operation (S230). During the above-described process, the replacement coordinators and their priorities are set.

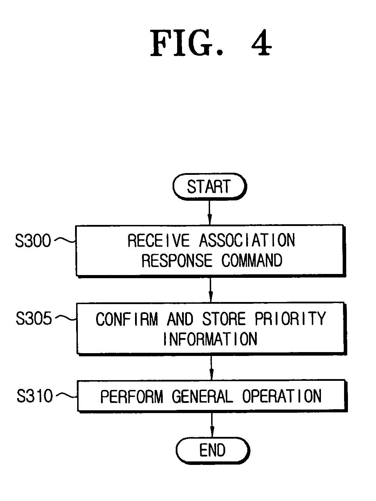

FIG. 4 is a flowchart explaining the operation of the device that transmitted the association request command to the coordinator. Referring to FIG. 4, the device first receives the association response command from the coordinator (S300), confirms whether the priority information is included in the received association response command, and if the priority information is included in the received association response command, stores the priority information (S305). If the confirmation and storage of the priority information is completed, the device performs a general operation such as the data transmission/reception with other devices (S310). If the priority information is included in the association response command, it means that the device is selected as the replacement candidate, and if the situation in that the beacon frame is not broadcast happens, the device serves as a new coordinator after a predetermined waiting time with reference to the priority information.

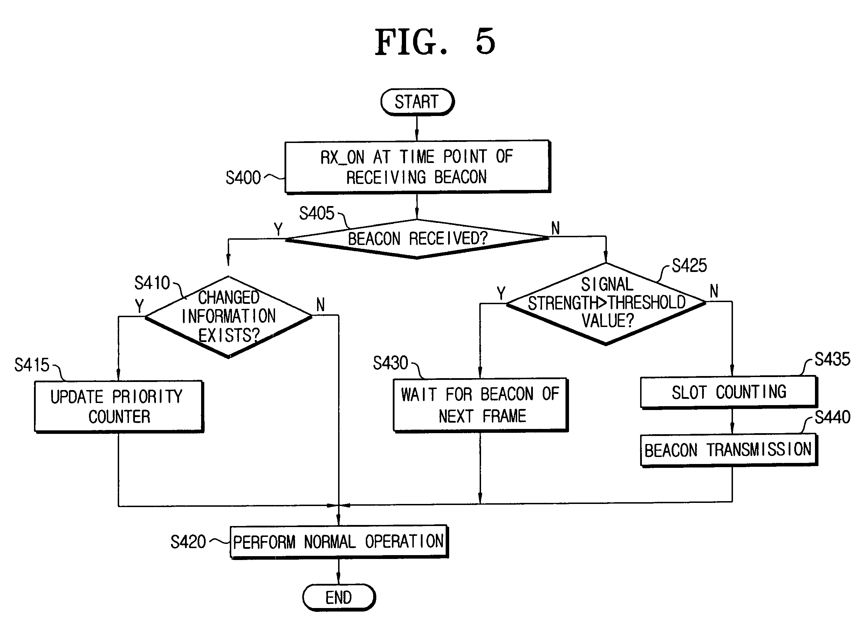

FIG. 5 is a flowchart illustrating the operation of the device that is selected as the replacement coordinate. Referring to FIG. 5, at a point in time during which the beacon frame is received,, the device is switched from the idle state to the RX_ON state to receive the beacon frame (S400), and checks whether the beacon frame is received (S405). If the beacon frame is received, it checks whether changed information exists in the beacon frame (S410). The changed information relates to the priority of the respective replacement coordinator. If the changed information does not exist as a result of checking at step S410, the device performs a normal operation (S420), and if the changed information exists, it updates its own priority counter (S415), changes its own priority, and then performs a normal operation (S420).

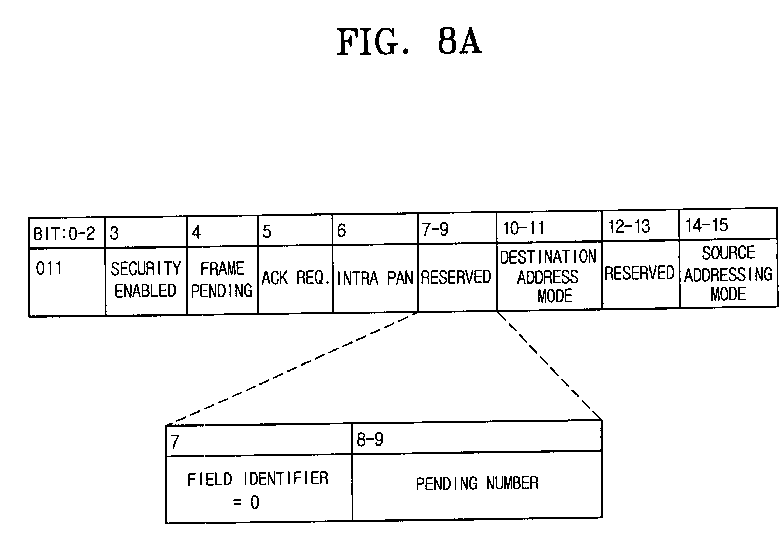

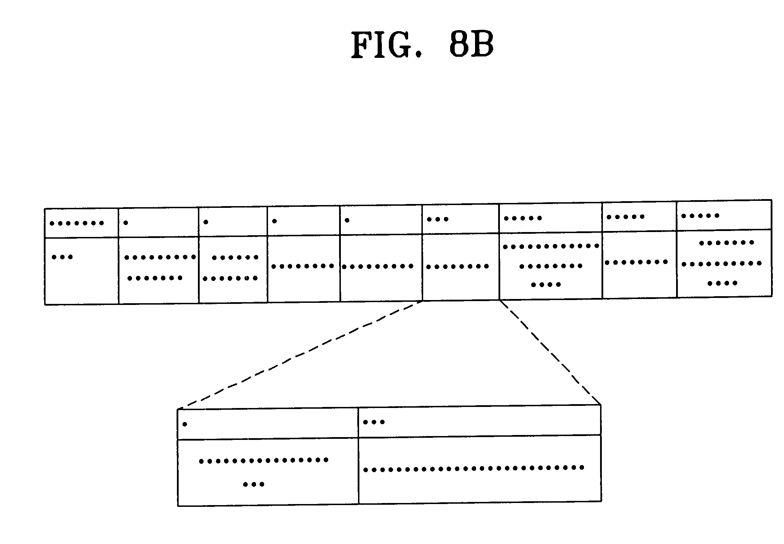

The beacon frame broadcast from the coordinator is basically identical to that prescribed in the IEEE 802.15.4 standard, except for the information which is included in 7-9 bits allocated as reserved bits in the frame control field of the beacon frame. That is, as shown in FIGS. 8A and 8B, only the field identifier bit, pending number, and disassociation device order in the reserved bits of 7-9 bits are different. Here, if the field identifier bit has a value of '1', 8-9 bits indicate the total number of replacement candidates, and if the field identifier bit has a value of '0', the priority of the device that requested the disassociation among the replacement coordinators is included. Accordingly, in the case that the disassociation happens, the respective device updates its own priority in response to this. Other bits of the frame control field of the beacon frame are the same as those in the frame control field of the association response command.

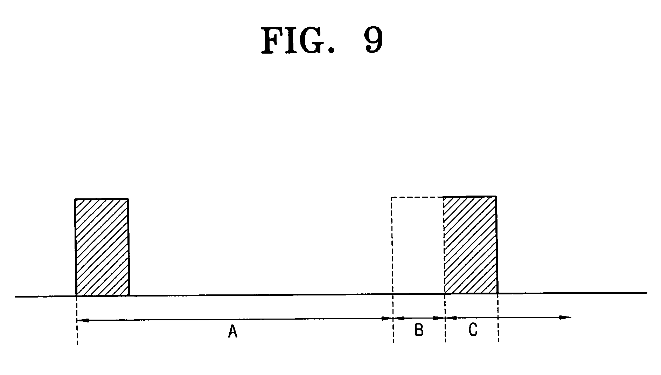

If the beacon frame is not received at step S405, the device checks whether the received signal is larger than a specified threshold value (S425). If it is determined that the signal strength is larger than the threshold value, the coordinator broadcasts the beacon frame. However, since the beacon frame may not be properly received, the device first waits for the reception of the beacon frame of the next frame (S430). On the contrary, if it is determined that the signal strength is smaller than the threshold value, the device recognizes that an unexpected situation happens so that the coordinator cannot broadcast the beacon frame. In this case, the device calculates the waiting time corresponding to its own priority by counting the slots (S435), and if the beacon frame is not broadcast until the calculated waiting time elapses, it becomes a new coordinator to transmit the beacon frame (S440). FIG. 9 illustrates the situation in that the beacon frame is broadcast through a device having the highest priority. That is, the device having the highest priority, if the beacon frame is not received after a predetermined time A, waits for a one slot time B according to its own priority, and then becomes a new coordinator to broadcast the beacon frame from the next slot.

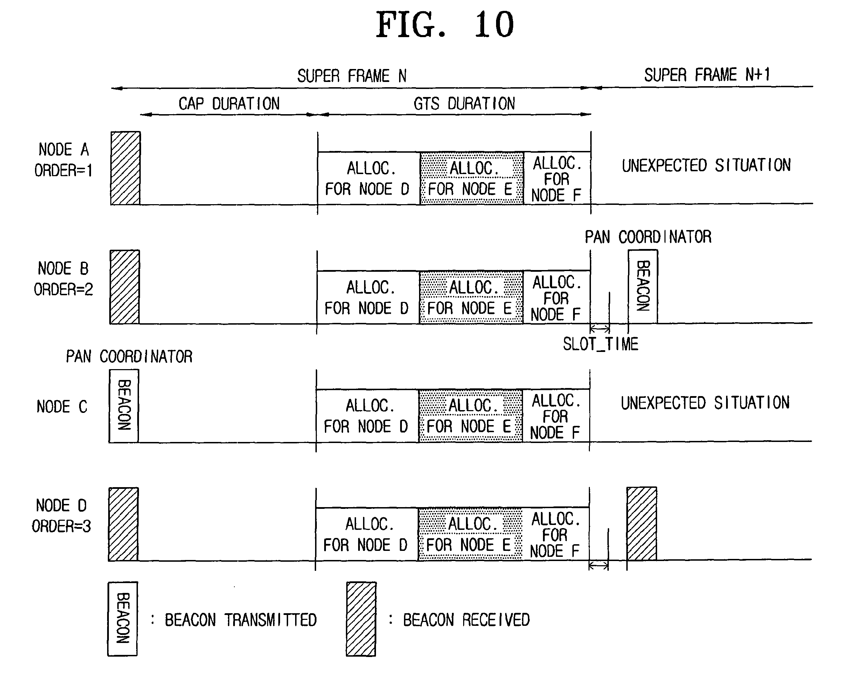

FIG. 10 is a view explaining another operation of the coordinator switching method according to the present invention. In FIG. 10, a node C serves as a coordinator, and nodes A, B and D are selected as replacement coordinators in order. At this time, if it is assumed that the node C abruptly escapes from the network as it serves as the coordinator in the N+1 super frame, the beacon frame is not received in the first slot of the (N+1) super frame. In this case, the node A having the highest priority will broadcast the beacon frame at the next slot. However, if the node A also escapes from the network, the node B having the next priority will broadcast the beacon frame in the next slot. By this method, the overhead problem, which may be generated during the connection resetting process, can be solved even if the coordinator cannot broadcast the beacon frame.

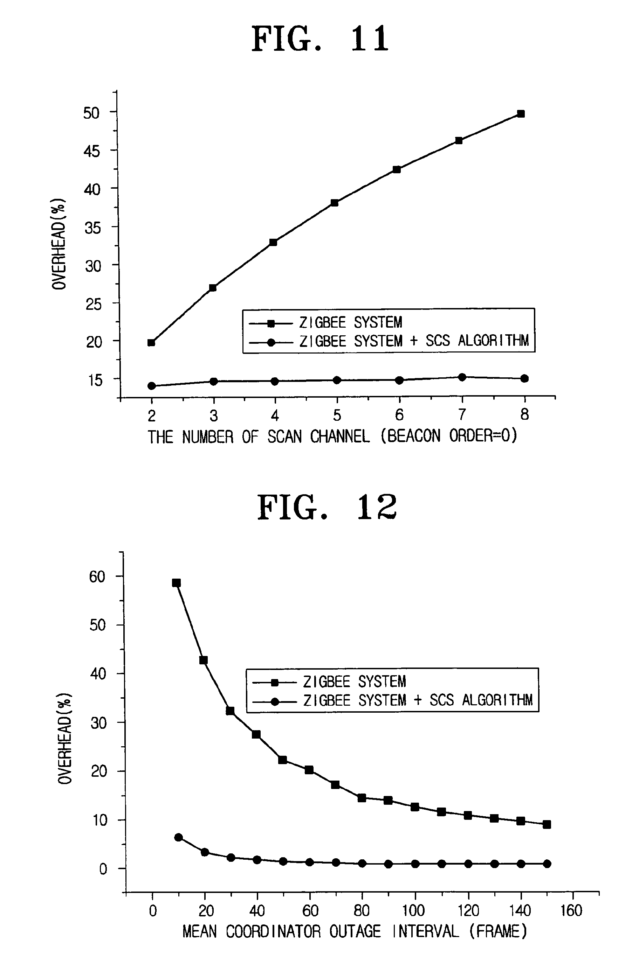

FIGS. 11 and 12 are graphs illustrating simulation results of the capabilities of the coordinator switching method according to the present invention and the coordinator switching method according to the ZigBee system of the IEEE 802.15.4 standard under the same environment. Here, FIG. 11 shows the resynchronization overhead according to the number of scan channels. In the graph of FIG. 11, "ZigBee system + SCS Algorithm" indicates the result of the coordinator switching method according to the present invention, and "ZigBee System" indicates the result of the conventional coordinator switching method according to the IEEE 802.15.4 standard. As illustrated in the graph, according to the conventional method, as the number of channels increase, the overhead generated during the resynchronization process continuously increases up to 20% to 50%, while according to the coordinator switching method according to the present invention, the overhead scarcely increases as the number of channels increase.

FIG. 12 is a graph illustrating the overhead according to the frequency of unexpected situations in which the coordinator cannot abruptly serve as the coordinator. In the graph, "ZigBee system + SCS Algorithm" indicates the result of the coordinator switching method according to the present invention, and "ZigBee System" indicates the result of the conventional coordinator switching method according to the IEEE 802.15.4 standard. As illustrated in the graph, by applying the coordinator switching method according to the present invention when the frequency of unexpected situations increases, the overhead can be reduced up to 50%.

As described above, according to the present invention, the present coordinator can be promptly replaced with another device even if an unexpected situation happens so that the present coordinator cannot suddenly serve as a coordinator in the ad-hoc network environment. Accordingly, in comparison to the case that a new coordinator is selected by re-performing the initialization process, the overhead is reduced and the communication efficiency is improved. Also, the present invention can secure a stable coordinator function even in a communication environment having strong mobility.

While the present invention has been described in detail, it should be understood that various changes, substitutions and alterations can be made hereto without departing from the spirit and scope of the invention as defined by the appended claims.

## Claims

1. A coordinator switching method, comprising:
(a) selecting a coordinator that broadcasts a sync signal for synchronizing an ad-hoc network environment;
(b) selecting at least one of a plurality of devices linked to the ad-hoc network as a replacement coordinator, and setting a priority of the selected replacement coordinator;
(c) transmitting the priority to the selected replacement coordinator; and
(d) if the sync signal is not broadcast for a predetermined time, the replacement coordinator becomes a new coordinator in accordance with the set priority, and broadcasts the sync signal.

2. The coordinator switching method of claim 1, further comprising including a total number of selected replacement coordinators in the sync signal, and transmitting the sync signal.

3. The coordinator switching method of claim 1, further comprising, if a connection release is requested by any one of the replacement coordinators, including information on a changed priority in the sync signal so as to change the priority accordingly, and broadcasting the sync signal.

4. The coordinator switching method of claim 1, wherein the step (b) comprises the steps of:
(b1) at least one of the plurality of devices transmitting a connection request command to the coordinator;
(b2) the coordinator selecting the replacement coordinator by inquiring the connection request command; and
(b3) setting the priority corresponding to a selection order of the replacement coordinator.

5. The coordinator switching method of claim 4, wherein the ad-hoc network is a WPAN (Wireless Personal Area Network) according to any one of the IEEE 802.15.3, IEEE 802.15.3a, and IEEE 802.15.4 standards.

6. The coordinator switching method of claim 5, wherein a total number of replacement coordinators and a changed priority are included in a beacon frame used as the sync signal to be transmitted.

7. The coordinator switching method of claim 6, wherein the total number of replacement coordinators is stored in a reserved field of a frame control field in a beacon frame along with an identifier for identifying the total number of replacement coordinators.

8. The coordinator switching method of claim 6, wherein the changed priority is stored in reserved bits of a frame control field in the beacon frame along with a specified identifier.

9. The coordinator switching method of claim 5, wherein at (b1), the connection request command is an association request command.

10. The coordinator switching method of claim 5, wherein at (c), the priority is included in an association response command to be transmitted.

11. The coordinator switching method of claim 10, wherein the priority is stored in reserved bits of a frame control field in the association response command.

12. A communication system operating in an ad-hoc network environment, comprising:
a plurality of devices connected to an ad-hoc network; and
a coordinator for synchronizing at least one of the plurality of devices by broadcasting a sync signal to the devices;
wherein the coordinator selects at least one replacement coordinator that can serve as the coordinator by inquiring a connection request command transmitted from the plurality of devices, and transmits a connection response command that includes a priority of the selected replacement coordinator to the device selected as the replacement coordinator; and
wherein the replacement coordinator, which is selected as the replacement coordinator, becomes a new coordinator according to a set priority, and broadcasts the sync signal if the sync signal is not broadcast for a predetermined time.

13. The communication system of claim 12, wherein the coordinator comprises:
a first transmission/reception unit for performing communications with at least one of the plurality of devices;
a first beacon generation unit for generating the sync signal
a first association command generation unit for generating a connection response command including the priority; and
a first control unit for broadcasting the sync signal through the first transmission/reception unit, selecting the replacement coordinator and setting the priority by inquiring the connection request command, and transmitting the connection response command, which is generated by providing the set priority to the first association command generation unit, to the device selected as the replacement coordinator through the first transmission/reception unit.

14. The communication system of claim 12, wherein at least one of the plurality of devices comprises:
a second transmission/reception unit for performing communications with the coordinator;
a second beacon generation unit for generating the sync signal;
a second association command generation unit for generating a connection response command;
a slot counter for calculating a waiting time corresponding to the priority;
a signal strength detection unit for detecting whether the sync signal is received; and
a second control unit for transmitting the connection request command to the coordinator through the second transmission/reception unit, providing the priority extracted from the received connection response command to the slot counter, and controlling to broadcast the sync signal through the second transmission/reception unit after the waiting time outputted from the slot counter if the sync signal is not broadcast as a result of signal strength detection.

15. The communication system of claim 14, wherein the ad-hoc network is a WPAN (Wireless Personal Area Network) according to any one of the IEEE 802.15.3, IEEE 802.15.3a, and IEEE 802.15.4 standards.

16. The communication system of claim 15, wherein the connection request command is an association request command, and the coordinator selects the replacement coordinator by inquiring a capability information field in the association request command.
